(19) Europäisches Patentamt / European Patent Office / Office européen des brevets

(11) **EP 1 975 140 A2**

(12) **EUROPEAN PATENT APPLICATION**

(43) Date of publication:
**01.10.2008 Bulletin 2008/40**

(21) Application number: **08010785.7**

(22) Date of filing: **07.03.2003**

(51) Int Cl.:
*C04B 38/00* (2006.01)    *C04B 35/64* (2006.01)
*B28B 3/26* (2006.01)    *B01J 35/04* (2006.01)
*B01D 53/86* (2006.01)    *B01D 53/94* (2006.01)
*F01N 3/28* (2006.01)

(84) Designated Contracting States:
**BE DE FR GB IT**

(30) Priority: **27.03.2002   JP 2002089272**

(62) Document number(s) of the earlier application(s) in accordance with Art. 76 EPC:
**03744986.5 / 1 489 060**

(71) Applicant: **NGK INSULATORS, LTD.**
**Nagoya-shi, Aichi 467-8530 (JP)**

(72) Inventors:
• **Fukao, Kaname**
**Mizuho-ku**
**Nagoya City**
**Aichi-ken, 467-8530 (JP)**

• **Yoshida, Shinya**
**Mizuho-ku**
**Nagoya City**
**Aichi-ken, 467-8530 (JP)**
• **Nakamura, Tomoo**
**Mizuho-ku**
**Nagoya City**
**Aichi-ken, 467-8530 (JP)**

(74) Representative: **Paget, Hugh Charles Edward et al**
**Mewburn Ellis LLP**
**York House**
**23 Kingsway**
**London WC2B 6HP (GB)**

Remarks:
This application was filed on 13-06-2008 as a divisional application to the application mentioned under INID code 62.

(54) **Method for manufacturing honeycomb structure**

(57)    There is disclosed a honeycomb structure (1) comprising: porous cell partition walls (2) forming a compound material in which a plurality of cells (3) are disposed adjacent to one another; and a porous honeycomb outer wall (4) which surrounds and holds an outermost peripheral cell positioned in an outermost periphery of the cell compound material. At this time, a porosity is 5% or more and is less than 30%, and an outer peripheral distortion of the honeycomb structure (1) is 0.030 or less. According to the honeycomb structure, a method for manufacturing the structure, and a method for measuring the outer peripheral distortion of the honeycomb structure, it is possible to obtain satisfactory and practical erosion resistance and isostatic strength in the respective honeycomb structures including various cell structures.

**EP 1 975 140 A2**

**Description**

TECHNICAL FIELD

The present invention relates to a honeycomb structure, a method for manufacturing the honeycomb structure, and a method for measuring an outer peripheral distortion of the honeycomb structure.

BACKGROUND ART

A honeycomb structure has been used broadly in a filter, a catalyst carrier, and the like, and has particularly frequently been used as a catalyst carrier in an exhaust gas purification apparatus of an internal combustion engine such as a car engine, a filter for purifying exhaust gas of a diesel engine, and the like.

When the honeycomb structure is used in the catalyst carrier of the exhaust gas purification apparatus of the car, out of consideration to environmental problems, exhaust gas regulations have tended to be tightened year by year. To follow this tendency, there has been a demand for enhancement of a purification capability of an exhaust gas purification catalyst. On the other hand, from the aspect of engine development, low fuel consumption and high output have remarkably been pointed to. To cope with this situation, there has also been a demand for reduction of pressure loss in the exhaust gas purification catalyst.

Therefore, to solve the problems, thicknesses of partition walls or outer peripheral walls of the honeycomb structure are further reduced to enhance air permeability and to reduce the pressure loss. Additionally, the exhaust gas purification catalyst is lightened to reduce heat capacity, and the purification capability at the time of warming-up is enhanced. This trend has grown stronger.

Since the thicknesses are reduced in this manner, strengths of the partition walls or outer peripheral walls of the honeycomb structure drop. Especially there has been a problem that an opening end surface exposed to highpressure exhaust gas exhausted from the engine, that is, the end of the partition wall wears hard (hereinafter referred to as erosion).

As means for solving the problem, a honeycomb structure including a reinforced portion in the end of the partition wall, and a method for manufacturing the structure are described, for example, in Japanese Patent Application Laid-Open No. 2000-51710. In the publication, the honeycomb structure is described whose strength has been enhanced by coating, replacing, and the like with a thickening, densifying, or strengthening material. Furthermore, the thickening and densifying of the partition wall in the vicinity of the end surface have been studied by a method for coating/firing the opening end surface of the honeycomb structure in the end of the honeycomb structure with glass components such as glaze and water glass, or by a method for similarly coating/firing the surface with raw materials forming the honeycomb structure such as a specific component of cordierite.

However, in the above-described publication, it is described that the end surface is strengthened as described above to improve the end surface strength in applying pressure to the end surface, but a degree of improvement of erosion resistance is not described. A relation between a basic wall thickness of the partition wall and a wall thickness of the reinforced portion is roughly described, but a relation between cell structures of the honeycomb structure such as a cell density, a substantial diameter of a cell, and a total pore capacity, and an actual erosion resistance is not studied. Depending on the cell structure of the applied honeycomb structure, there has been a problem that effects are not sufficiently developed or the pressure loss or heat capacity is increased.

Moreover, with the thinning of the walls of the honeycomb structure, the honeycomb structure is densified, and accordingly it is also possible to improve the erosion resistance.

At this time, since contraction of an extruded dried body at the time of the firing of the honeycomb structure usually increases, a contraction difference between an inner side (basic partition wall portion) and an outer side (outer wall portion) of the honeycomb structure increases. The outer side (outer wall portion) of the honeycomb structure is taken into the inner side (basic partition wall portion), the outer side (outer wall portion) of the honeycomb structure is distorted, and there has been a problem that an isostatic strength of the honeycomb structure remarkably drops.

This phenomenon is remarkable in a case in which the partition wall thickness (Tc) of the honeycomb structure is 0.076 mm or less.

The present invention has been developed in consideration of the above-described problems, and an object thereof is to provide a honeycomb structure in which distortion of an outer side (outer wall portion) of the honeycomb structure at the time of the firing of the honeycomb structure is inhibited to obtain satisfactory and practical erosion resistance and isostatic strength in the respective honeycomb structures including various cell structures, a method for manufacturing the honeycomb structure, and a method for measuring an outer peripheral distortion of the honeycomb structure.

## DISCLOSURE OF THE INVENTION

According to the present invention (first aspect of the invention), there is provided a honeycomb structure comprising: porous cell partition walls forming a compound material in which a plurality of cells are disposed adjacent to one another; and a porous honeycomb outer wall which surrounds and holds an outermost peripheral cell positioned in an outermost periphery of the cell compound material, characterized in that porosity is 5% or more and is less than 30%, and an outer peripheral distortion of the honeycomb structure is 0.030 or less.

At this time, in the present invention, a partition wall thickness (Tc) of the honeycomb structure is preferably 0.030 mm s Tc < 0.076 mm, and an outer wall thickness (Ts) of the honeycomb structure is 0.076 mm or more.

Moreover, in the present invention, a coefficient of thermal expansion at 40 to 800°C in a channel direction of the honeycomb structure is preferably $0.8 \times 10^{-6}$/°C or less.

Furthermore, according to the present invention (second aspect of the invention), there is provided a method for manufacturing a honeycomb structure (first aspect of the invention) comprising: porous cell partition walls forming a compound material in which a plurality of cells are disposed adjacent to one another; and a porous honeycomb outer wall which surrounds and holds an outermost peripheral cell positioned in an outermost periphery of the cell compound material, characterized in that the method comprising: using a raw material containing at least talc and kaolin components, containing talc whose average particle diameter is 7 $\mu$m or more, and containing kaolin whose average particle diameter is 2 $\mu$m or more to carry out a firing process in which a temperature range is held at 1100 to 1200°C for a given time or temperature is raised at a temperature rise speed of 50°C/hr or less and is subsequently raised at a maximum temperature.

At this time, in the present invention, it is preferable to use talc and kaolin whose average particle diameter in terms of a substantial sphere diameter measured by a laser diffraction process is 1.6 or more times that in term of a Stokes' diameter measured by a precipitation process.

Furthermore, according to the present invention (third aspect of the invention), there is provided a method for measuring an outer peripheral distortion of a honeycomb structure, characterized by: measuring an outer peripheral shape of the honeycomb structure; extracting a measurement point from a group of obtained measurement points in such a manner that a pitch on an outer periphery becomes equal; obtaining a center, and angle and distance (diameter) from the center from the measurement point; subjecting obtained distance information to a low pass filter treatment; subsequently obtaining an absolute value of a difference between an obtained waveform and a waveform subjected to the filter treatment; and obtaining an average value in positions of the extracted measurement points.

At this time, an FIR filter is preferably used in the filter treatment.

## BRIEF DESCRIPTION OF THE DRAWINGS

FIGS. 1(a), (b), (c) are explanatory views schematically showing one example of a honeycomb structure of the present invention, FIG. 1(a) is a perspective view, FIG. 1(b) is a plan view, and FIG. 1(c) is a side view;

FIG. 2 is a partially enlarged view schematically showing an example in which a cell partition wall in the vicinity of an outer wall is thickened according to one embodiment of the present invention;

FIGS. 3(a), (b), (c) are sectional explanatory views according to one embodiment of the honeycomb structure of the present invention, FIG. 3(a) shows a cell partition wall having an inverted trapezoidal shape, FIG. 3(b) shows the wall having a bobbin shape, and FIG. 3(c) shows the wall having a rectangular shape;

FIG. 4 is an explanatory view schematically showing an example in which the honeycomb structure of the present invention is incorporated in a converter container;

FIG. 5 is a diagram showing conditions of an engine rotation number in an erosion test; and

FIG. 6 is an explanatory view schematically showing a method for measuring an erosion amount.

## BEST MODE FOR CARRYING OUT THE INVENTION

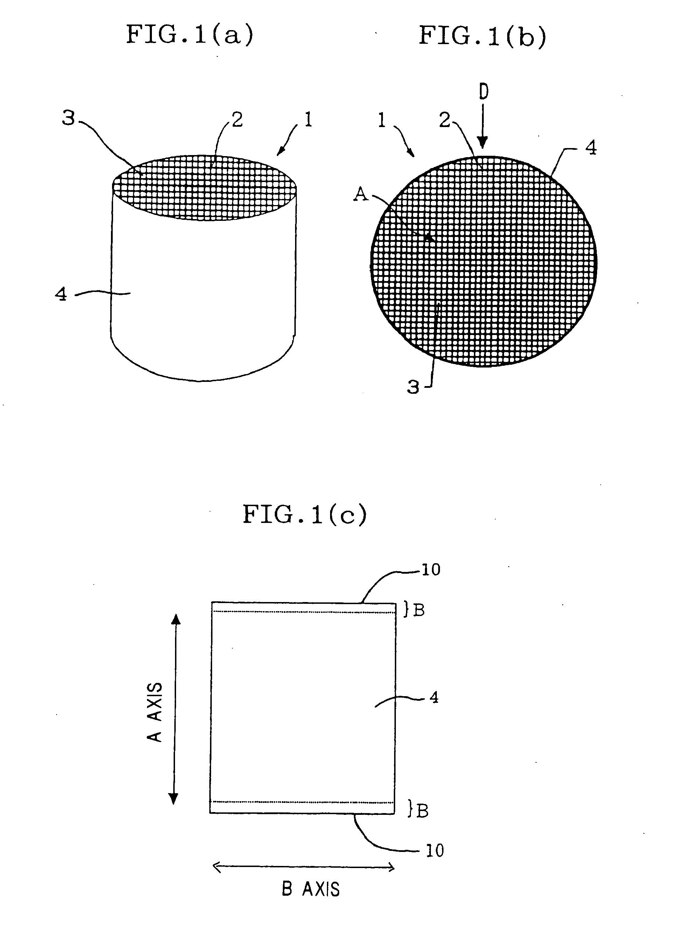

As described above, as shown in FIGS. 1(a), (b), (c), a honeycomb structure 1 of the present invention is constituted of porous cell partition walls 2 forming a plurality of cells 3 extending through an axial direction and disposed adjacent to one another, and a porous honeycomb outer wall 4. It is to be noted that in the present invention a section means a section vertical to the axial direction unless particularly mentioned.

For characteristics of the honeycomb structure of the present invention (first aspect of the invention), two requirements are simultaneously satisfied that a total porosity of the cell partition walls 2 and outer wall 4 constituting the honeycomb structure 1 is 5% or more and is less than 30% and that an outer peripheral distortion of the honeycomb structure is 0.030 or less.

Accordingly, the distortion of an outer side (outer wall portion) of the honeycomb structure at the time of firing of the honeycomb structure can be suppressed. In the respective honeycomb structures including various cell structures, reduction of heat capacity is achieved, erosion resistance can be improved, and practical isostatic strength can be obtained.

In the present invention, the total porosity of the cell partition walls 2 and outer wall 4 constituting the honeycomb structure 1 is preferably 5% or more and is less than 30%.

This is because with the porosity less than 5%, the heat capacity becomes excessively large. When the porosity is 30% or more, an erosion amount becomes excessively large.

Moreover, in the present invention, since the outer peripheral distortion of the honeycomb structure is controlled to be 0.030 or less, remarkable drop of the isostatic strength of the honeycomb structure can be prevented.

At this time, the outer peripheral distortion of the honeycomb structure is preferably measured by a measurement method of the present invention (third aspect of the invention).

In this method, an outer peripheral shape of the honeycomb structure is measured, a measurement point is extracted from a group of obtained measurement points in such a manner that a pitch on an outer periphery becomes equal, a center is obtained ,and an angle and distance (diameter) from the center are obtained from the measurement point, and obtained distance information is subjected to a low pass filter treatment. Subsequently, an absolute value of a difference between an obtained waveform and a waveform subjected to the filter treatment is obtained, and an average value in positions of the extracted measurement points is obtained so that the distortion can be obtained. When the filter treatment is used, a large diameter change passes through the filter. Therefore, the present invention can be applied, even when a sectional shape of the honeycomb structure is an irregular shape or oval.

It is to be noted that an FIR filter is preferably used in the filter treatment.

Next, the application of the measurement method of the present invention (third aspect of the invention) will be described in more detail.

1) The outer peripheral shape of the honeycomb structure is measured to obtain a point group $Pn(x_n, y_n)$.

2) The point is extracted from Pn in such a manner that a sample pitch on a peripheral length becomes equal (e.g., 0.5 mm) to obtain $P'm(x_m, y_m)$ (the number of points m).

3) From this, a gravity center of the honeycomb structure, or a portion corresponding to a drawing center is obtained to convert the group to a point group $P_{1m}(r_{1m}, \theta_{1m})$ of an $r\theta$ coordinate system centering on the portion (the number of points n).

4) The obtained $r_{1m}$ is passed through a low pass filter, and $r'_{1m}$ is obtained to obtain $P'_{1m}(r'_{1m}, \theta'_{1m})$.

5) A difference between $r_{1m}$ and $r'_{1m}$ is obtained as $d_{1m}$ to obtain $Dm(d_{1m}, \theta_{1m})$.

6) A final evaluation value c corresponds to an average of a region.

A. Evaluation of All Regions

$$c_{all} = \Sigma(|d_{1m}| \times pitch)/peripheral\ length$$

B. Evaluation for Each Given Angle

One periphery is divided into K regions as follows.

Region 1: $-360/2K \leq \theta_{1m} < 360/2K$
Region 2: $360/2K \leq \theta_{1m} < 360/2K \times 3$
Region 3: $360/2K \times 3 \leq \theta_{1m} < 360/2K \times 5$
Region K: $360/2K(2K-3) \leq \theta_{1m} < 360/2K \times (2K-1)$

Dm belonging to each region is used to obtain an evaluation value $c_k$ of each region.

$$c_k = \Sigma(|d_{1m}| \times pitch)/peripheral\ length\ of\ divided$$

$$portion$$

(for a range of lm, $\theta_{lm}$ is in a range of region k)

Furthermore, in the honeycomb structure of the present invention (first aspect of the invention), a partition wall thickness (Tc: basic wall thickness) of the honeycomb structure is preferably 0.030 mm ≤ Tc < 0.076 mm.

This is because with Tc of 0.076 mm or more, the heat capacity becomes excessively large. When the thickness is less than 0.03 mm, the strength of the partition wall comes short, and the erosion amount becomes excessively large.

On the other hand, even when the porosity is 30% or more and Tc is less than 0.076 mm, a heat capacity similar to that of the present invention can be obtained. However, in this case, the erosion amount becomes excessively large.

It is to be noted that the honeycomb structure of the present invention preferably simultaneously satisfies 0.5 $\mu$m ≤ $Ra_s$ ≤ 10 $\mu$m and 5 $\mu$m ≤ $RzDIN_s$ ≤ 50 $\mu$m, and further preferably simultaneously satisfies 1.0 $\mu$m ≤ $Ra_s$ ≤ 10 $\mu$m and 10 $\mu$m ≤ $RzDIN_s$ ≤ 50 $\mu$m.

This is because with $Ra_s$ less than 0.5 $\mu$m and $RzDIN_s$ less than 5 $\mu$m, a canning property excessively drops. When $Ra_s$ is larger than 10 $\mu$m, and $RzDIN_s$ is larger than 50 $\mu$m, a concave/convex portion is excessively larger, a fluctuation of the diameter becomes excessively large, the number of pores in the honeycomb structure is excessively large, the strength drops, and the structure easily breaks.

Here, in the present invention, the porosity represents a volume of a pore (void) in a porous material to that of a total porous material forming the cell partition walls 2 and outer wall 4 in percentage.

Furthermore, the basic wall thickness (Tc) refers to the wall thickness of a thinnest cell partition wall of the honeycomb structure 1.

In the present invention, the wall thickness is preferably wholly uniform, but when the wall thickness of the cell partition wall on the side of the outer peripheral portion is increased, the wall thickness of the cell partition wall in another inner portion is preferably uniform. In this case, the wall thickness of the inner portion is the basic wall thickness (Tc).

On the other hand, when the wall thickness in the vicinity of an opening end surface 10 of the honeycomb structure is increased, the wall thickness is preferably uniform excluding the portion, and in this case the wall thickness of the partition wall excluding the partition wall in the vicinity of the opening end surface 10 is the basic wall thickness (Tc).

Moreover, an average surface roughness (Ra) is calculated as an average of displacement from an average line based on results obtained by measurement on conditions described later in examples, and RzDIN is calculated as an average of a difference between a height of a vertex of an arbitrary mountain-shaped portion indicating a maximum and that of a lowermost point of a valley-shaped portion indicating the next minimum in a range measured on the same condition as the above-described condition. Here, $Ra_s$ and $RzDIN_s$ indicate Ra and RzDIN of the outer wall 4, and $Ra_c$ and $RzDIN_c$ denote Ra and RzDIN of each cell partition wall 2.

In the present invention, an average surface pore diameter of the outer wall 4 is preferably larger than an average inner pore diameter, when $Ra_s$ and $RzDIN_s$ are increased. Here, the average surface pore diameter means an average diameter of pores formed as open pores in the surface of the outer wall 4, and the average inner pore diameter means the average diameter of pores which exist as closed pores inside the outer wall 4. When a ratio of pores having a large pore diameter in the outer wall 4 is increased, and the pores having a pore diameter of 1 $\mu$m or more are preferably formed in 90% or more of all the pores in the outer wall 4, the average surface pore diameter can be set to be larger than the average inner pore diameter.

Moreover, in the present invention, when the porosity is less than 30%, the surface of the cell partition wall 2 is also easily smoothed, but an average surface roughness ($Ra_c$) of the cell partition wall is 0.5 $\mu$m ≤ $Ra_c$ ≤ 10 $\mu$m and/or ($RzDIN_c$) is 5 $\mu$m ≤ $RzDIN_c$ ≤ 50 $\mu$m, further preferably 1.0 $\mu$m ≤ $Ra_c$ ≤ 10 $\mu$m and/or 10 $\mu$m ≤ $RzDIN_c$ ≤ 50 $\mu$m. Accordingly, a carrying force of a catalyst to be carried increases, and the catalyst is prevented from dropping off.

As described above, the porosity is set to be 5% or more and less than 30%, $Ra_s$ is 0.5 $\mu$m ≤ $Ra_s$ s 10 $\mu$m, preferably 1.0 $\mu$m ≤ $Ra_s$ ≤ 10 $\mu$m and/or $RzDIN_s$ is 5 $\mu$m ≤ $RzDIN_s$ ≤ 50 $\mu$m, preferably 10 $\mu$m s $RzDIN_s$ ≤ 50 $\mu$m, and/or the average surface roughness ($Ra_c$) of the cell partition wall 2 is 0.5 $\mu$m ≤ $Ra_c$ ≤ 10 $\mu$m and/or $RzDIN_c$ is 5 $\mu$m ≤ $RzDIN_c$ ≤ 50 $\mu$m. For this, in the cell partition wall 2 and outer wall 4 constituting the honeycomb structure of the present invention, the pores having a pore diameter of 1 $\mu$m or more preferably occupy 90% or more by volume of a total pore volume. When the pores are constituted in this manner, fine concave/convex portions of the surface can be made, and the above-described Ra and RzDIN can easily be achieved.

Moreover, when an open area ratio is 83% or more in the present invention, drop of pressure loss is reduced, heat capacity can also be reduced, and therefore purification capability of the honeycomb structure of the present invention can be enhanced. Here, the open area ratio represents a ratio of an area occupied by the cells, that is, the pores partitioned by the partition walls to an area of the honeycomb structure opening end surface 10 in percentage. The open area ratio can be enhanced, when cell density is decreased and/or the cell partition wall is thinned.

It is to be noted that in the present invention, a thickness (Ts) of the outer wall 4 of the honeycomb structure is preferably 0.076 mm or more, because the strength of the carrier at the time of canning can be enhanced.

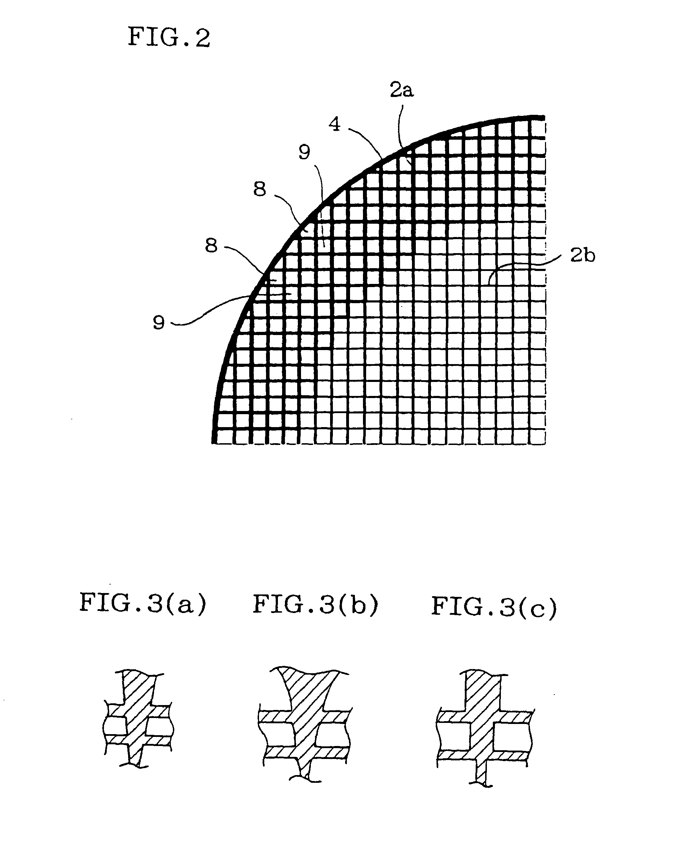

In the present invention, as shown in FIG. 2, a cell partition wall 2a on the side of the outer peripheral portion is preferably thickened so as to enhance the erosion resistance. When the cell partition wall 2 on the side of the outer peripheral portion is thickened, the isostatic strength is enhanced, a grasping force at the time of the canning can be strengthened, and therefore the canning property is also enhanced. Here, the isostatic strength is a strength indicated in an applied pressure value at the time of destruction by a test which conforms to a car standard JASO Standard M505-87. In FIG. 2, outermost peripheral cells 8 are most in the vicinity of the outer wall 4, and second cells 9 are continued inwards from the outermost peripheral cells 8. A partition wall thickness of the outermost peripheral cell is represented by $Tr_1$, and that of the second cell 9 is represented by $Tr_2$. Although not shown, the thickness of the partition wall of any cell in a range of fifth to fifteenth cells is represented by $Tr_{5 \text{ to } 15}$. It is to be noted that the cell partition walls 2 are roughly divided into an outer peripheral cell partition wall 2a and basic cell partition wall 2b.

For the honeycomb structure of the present invention, between the outermost peripheral cell which is a start point and any end point cell in a range of fifth to fifteenth cells continued inwards, a relation between each cell partition wall thickness ($Tr_1$ to $Tr_{5 \text{ to } 15}$) and the basic wall thickness (Tc) is preferably $1.10 \leq (Tr_1$ to $Tr_{5 \text{ to } 15})/Tc \leq 3.00$. When this value [($Tr_1$ to $Tr_{5 \text{ to } 15})/Tc$] is less than 1.10, this does not contribute to the enhancement of the erosion resistance or the improvement of the isostatic strength, and therefore this does not contribute to the enhancement of the canning property. When this exceeds 3.00, the heat capacity and pressure loss increase. Even when the partition wall thicknesses ($Tr_1$ to $Tr_4$) of the first to fourth cells are increased at a specific ratio, this does not contribute to the enhancement of the erosion resistance or the isostatic strength. When the partition wall thicknesses of the fifteenth and subsequent cells, particularly the twentieth and subsequent cells are increased at the specific ratio, the pressure loss increases, a mass of the carrier increases by a predetermined or more amount, and therefore the heat capacity also unfavorably increases.

As shown in FIGS. 3(a), (b), (c), in the honeycomb structure of a ceramic according to the present invention, the next cell disposed inwards adjacent to a first end point cell is assumed to be a first appearing second start point cell. Each cell partition wall thickness extending to any second end point cell in a range of the third to fifth cells continued inwards is changed in such a manner that the section of each cell partition wall has an inverted trapezoidal shape (FIG. 3(a)), a bobbin shape (FIG. 3(b)), or a rectangular shape (each cell has a uniform thickness) (FIG. 3(c)) and successively becomes thinner inwards (a thinning ratio may be in a range of 1.10 to 3.00). The thickness of a thinnest portion preferably agrees with the basic wall thickness (Tc). By this constitution, the increase of the heat capacity or the pressure loss is reduced, and the erosion resistance can be enhanced.

Moreover, in the present invention, there is a relation of $1.10 \leq Tr_1/Tc \leq 3.00$ between the cell partition wall thickness ($Tr_1$) of the outermost peripheral cell and the basic wall thickness (Tc). Additionally, the outermost peripheral cell is assumed to be first appearing third start point cell. Each cell partition wall thickness ($Tr_1$ to $Tr_{5 \text{ to } 20}$) extending to any third end point cell in a range of fifth to twentieth cells continued inwards has a relation of $1.10 s (Tr_1$ to $Tr_{5 \text{ to } 20})/Tc \leq 3.00$ with the basic wall thickness (Tc). The thickness is changed in such a manner that the section of each cell partition wall has the inverted trapezoidal shape, bobbin shape, or rectangular shape as described above, and successively becomes thinner inwards. The thickness of the thinnest portion preferably agrees with the basic wall thickness (Tc). By this constitution, the pressure loss or a thermal shock resistance ratio can be enhanced.

Furthermore, in the present invention, conditions are further limited in such a manner that each of cell partition wall thicknesses ($Tr_1$ to $Tr_{5 \text{ to } 20}$) has a relation of $1.10 \leq (Tr_1$ to $Tr_{5 \text{ to } 20})/Tc \leq 2.50$, further $1.20 \leq (Tr_1$ to $Tr_{5 \text{ to } 20})/Tc \leq 1.60$ with respect to the basic wall thickness (Tc) as described above. This is practically preferable in consideration of the heat capacity and pressure loss.

Moreover, in recent years, an opportunity in which a honeycomb carrier is also mounted in large-sized vehicles such as a truck has tended to increase, and a necessity of using a large-sized honeycomb carrier has occurred. With the large-sized honeycomb carrier (the sectional shape of the honeycomb outer wall is circular, and the diameter is about 144 mm or more, that is, a sectional area is about 160 cm$^2$ or more), the outermost peripheral cell is assumed to be the first appearing first start point cell, and the first end point cell is assumed to be any cell in a range of the tenth to 40th cells continued inwards from the outermost peripheral cell, preferably in a range of the tenth to 30th cells. A thickened portion is totally extended. A ratio ($Tr_1$ to $Tr_{10 \text{ to } 40}$)/Tc, preferably ($Tr_1$ to $Tr_{10 \text{ to } 30}$)/Tc of each cell partition wall thickness ($Tr_1$ to $Tr_{10 \text{ to } 40}$), preferably ($Tr_1$ to $Tr_{10 \text{ to } 30}$) to the basic wall thickness (Tc) is preferably usually constituted to be 1.10 to 3.00, practically 1.10 to 2.50, further practically 1.20 to 1.60.

In the present invention, in order to further improve the erosion resistance, the value of the porosity of all or some of the cell partition walls 2 in a range B within 30 mm or less from the opening end surface 10 in the axial direction is preferably smaller than that of the porosity of the cell partition walls of another part by 5 or more. This means, for example, that with the usual porosity of the cell partition wall 2 (the cell partition wall of the part other than the range B) which is 28%, the porosity of some or all of the cell partition walls 2 in the range B is set to 23% or less. In this case, a length from the opening end surface 10, along which the porosity is reduced, may also be uniform, but an arbitrary length is taken between 0 and 30 mm for each partition wall 2, that is, the length is preferably non-uniform. When the length is not uniform, stress concentration of a boundary portion having a changing porosity can be alleviated.

Moreover, the wall thicknesses of all or some of the cell partition walls 2 in the range B are preferably set to be larger than those of the cell partition walls 2 of the other part so as to further enhance the erosion resistance. Even in this case, the region including the large wall thickness preferably takes the arbitrary length between 0 and 30 mm for each partition wall 2, that is, the length is not uniform. This is also preferable because the stress concentration is alleviated in the same manner as described above.

As described above, the cell partition wall on the side of the outer peripheral portion of the honeycomb structure 1 is thickened, the porosity of the partition wall in the vicinity of the opening end surface 10 is reduced, or the outer wall is thickened. This is effective, particularly when the thickness of the partition wall is small. In this case, the basic wall thickness Tc is preferably Tc s 0.056 μm.

Moreover, the coefficient of thermal expansion at 40 to 800°C in the channel direction of the honeycomb structure is set to $0.8 \times 10^{-6}$/°C or less, and this is required for securing sufficient thermal shock resistance of the honeycomb structure.

Furthermore, when an axis-B strength is set to 0.8 MPa or more, breakage at a time when foreign particles in the exhaust gas collide with the partition walls can be reduced, and the erosion resistance is preferably enhanced. Here, the axis-B strength is defined by JASO Standard M505-87, and means a strength measured with a sample cut out in a direction vertical to the axial direction and extending along the cell partition wall.

Examples of the cell partition wall and honeycomb outer walls for use in the present invention include a wall formed of at least one material selected from a group consisting of cordierite, alumina, mullite, silicon nitride, aluminum titanate, zirconia, and silicon carbide.

Moreover, examples of the sectional shape of the honeycomb structure of the present invention include a circle, ellipse, oval, trapezoidal shape, triangular shape, quadrangular shape, hexagonal shape, and horizontally asymmetric irregular shape. Above all, circle, ellipse, and oval are preferable.

Furthermore, the shape of the section of the cell for use in the present invention is not especially limited, but examples include polygonal shapes other than the triangular shape, such as square, rectangular shape, and hexagonal shape. Above all, any of the triangular shape, quadrangular shape, and hexagonal shape is preferable.

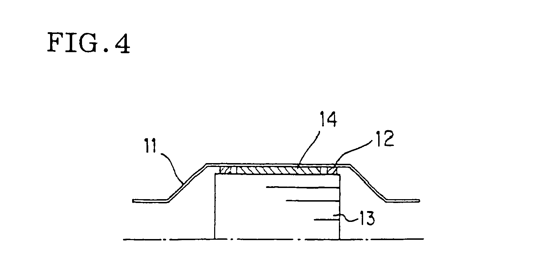

The application of the honeycomb structure of the present invention is not especially limited, and the structure can be used in various applications such as various filters and catalyst carrier, but the structure is especially preferably used in a carrier for purifying the car exhaust gas. The honeycomb structure of the present invention is preferably incorporated in a catalyst converter container for use as shown in FIG. 4. Here, a honeycomb structure 13 is grasped and incorporated by a ring 12 in an outer peripheral surface of a converter container 11. The ring 12 is not especially limited, but a ring of a metal mesh is usually used. It is to be noted that grasping materials 14 such as a mat and cloth are preferably disposed between the converter container 11 and the outer peripheral surface of the honeycomb structure 13.

Moreover, a portion via which the outermost peripheral cell partition wall of the honeycomb structure contacts the outer wall is padded (contact point padding), or the inner side of the outer wall is padded (V-shaped connection padding) at least between the partition walls in a portion via which the partition walls disposed adjacent to each other via a reduced interval contact the outer wall. Accordingly, effects such as enhancement of precision of the partition wall (cell partition wall) shape and enhancement of the isostatic strength are maintained, while the thickness of the cell partition wall may relatively be reduced. Concretely, a corner portion of the cell is preferably formed so as to have a curvature radius of 1.2 mm or less, and an intersection via which the cell partition wall contacts the honeycomb outer wall is preferably formed so as to have a curvature radius of 1.2 mm or less.

Next, a method for manufacturing the honeycomb structure of the present invention will be described.

For example, for the honeycomb structure whose material is cordierite, a cordierite raw material is prepared, for example, from talc, kaolin, calcined kaolin, alumina, aluminum hydroxide, and silica at a predetermined ratio so that a chemical composition is in ranges of $SiO_2$ of 42 to 56% by weight, $Al_2O_3$ of 30 to 45% by weight, and MgO of 12 to 16% by weight, and 15 to 25% by weight of graphite which is a hole making agent, and 5 to 15% by weight of synthetic resins such as PET, PMMA, cross-linking polystyrene, and phenol resin are added to the raw material. After adding predetermined amounts of methyl celluloses and surface-active agents, water is appropriately added, and the material is kneaded to form a body.

The body is vacuum-evacuated, subsequently extruded into the honeycomb structure, and dried by a dielectric drying, microwave drying, or hot air drying process.

At this time, in the present invention, to fire the extruded dried body, constant temperature is held at a temperature range of 1100 to 1200°C, or raised at a temperature rise speed of 50°C/hr or less, and preferably subsequently raised at a maximum temperature (e.g., between 1400 and 1440°C).

Accordingly, a contraction difference between the inner side (basic partition wall portion) and the outer side (outer wall portion) of the honeycomb structure at the time of the firing (especially region at 1100 to 1200°C) can be alleviated. Therefore, the outer side (outer wall portion) of the honeycomb structure is not drew into the inner side (basic partition wall portion), and the outer side (outer wall portion) of the honeycomb structure can be inhibited from being distorted.

In general, to obtain a porosity which is less than 30%, talc having a small average particle diameter, concretely talc having an average particle diameter of 7 μm or less and kaolin having an average particle diameter of 1/3 of that of talc are preferably used, but for the characteristics of the present invention (second aspect of the invention), a raw material containing talc having an average particle diameter of 7 $\mu$m or more and kaolin having an average particle diameter of 2 $\mu$m or more is preferably used as the raw material.

It has heretofore been known that the use of talc including coarse particles deteriorates the coefficient of thermal expansion of the honeycomb structure of cordierite. However, when kaolin including coarse particles is also used, it has been difficult to achieve the coefficient.

In the present invention, the raw material whose average particle diameter in terms of the substantial sphere diameter measured in the laser diffraction process is 1.6 or more times that in terms of the Stokes' diameter measured in the precipitation process of talc and kaolin is used. Therefore, even when kaolin including coarse particles is used, the coefficient of thermal expansion at 40 to 800°C in the channel direction of the honeycomb structure is effectively and preferably lowered to $0.8 \times 10^{-6}$/°C or less.

More preferably, as the raw material, coarse particle talc having an average particle diameter of 7 $\mu$m or more is combined with fine particle talc having an average particle diameter of 2/3 or less of that of coarse particle talc, and coarse particle kaolin having an average particle diameter of 7 $\mu$m or more is combined with fine particle kaolin having an average particle diameter of 2/3 or less of that of coarse particle kaolin.

It is to be noted that a preferable ratio of coarse particle talc to fine particle talc is 10/90 to 60/49, and a preferable ratio of coarse particle kaolin to fine particle kaolin is 10/90 to 60/40.

With the use of this combination, it is possible to easily manufacture the honeycomb structure in which the porosity, the distortion ratio to the sectional shape of the honeycomb structure, and the isostatic strength are included in the scope of the first aspect of the invention.

Furthermore, kneading devices in which the raw material is strongly kneaded and densely packed, such as Banbury kneader, pressurizing kneader, and continuous extruder, are used to extrude the material, and this is preferable in manufacturing the honeycomb structure which is low in the porosity and coarse in the surface roughness.

It is to be noted that the average particle diameter obtained by the laser diffraction system refers to a weight average particle diameter obtained by measuring a particle size distribution with LA-910 manufactured by Horiba, Ltd., and the average particle diameter obtained by the precipitation process is obtained with Cedi Graph manufactured by Micromeritics Co.

The present invention will be described hereinafter based on examples in more detail, but is not limited to these examples.

It is to be noted that in the following examples, % in a blend ratio means wt% unless especially mentioned.

(Examples 1 to 6, Comparative Examples 1 to 3)

For the raw materials prepared at blend ratios shown in Tables 1 and 2, with respect to 100% of the raw material, 8% of hydroxypropyl methyl cellulose, 0.5% of potash soap laurate, 2% of polyether, and 28% of water were mixed with a mixer, and charged into a continuous extruder to extrude a honeycomb having a wall thickness (rib thickness) of 0.055 mm and cell density of 900 cells/in$^2$ (140 cells/cm$^2$). This was cut into a predetermined dimension, held at a temperature range of 1100 to 1200°C for five hours, and fired at 1430°C for four hours. The porosity, coefficient of thermal expansion (CTE), distortion, and isostatic strength of each obtained honeycomb structure were measured. The results are shown in Table 2.

It is to be noted that the porosity, outer peripheral distortion, and isostatic strength of the honeycomb structure were measured as follows.

(Measurement of Porosity)

Measurement device: porosimeter (manufactured by Micromeritics Co., Auto Pore 9220 type device)

Measurement procedure

(1) 0.1 g or more of sample was cut out of the honeycomb structure.
(2) The sample was dried at 150°C for two hours, subsequently disposed in the container, and set in the device.
(3) Mercury was injected into the container, a pressure corresponding to the defined pore diameter was added, and a mercury volume absorbed by the sample was obtained.
(4) A pore distribution was calculated/obtained from the pressure and the absorbed mercury volume.
(5) A pore volume was calculated/obtained from the absorbed mercury volume with an added pressure of 68.6 MPa (700 kgf/cm$^2$).

(6) The porosity was obtained from a total pore volume in the following equation.

$$\texttt{Porosity \% = total pore volume (per 1 g)×100/(total}$$

$$\texttt{pore volume (per 1 g)+1/2.52)}$$

(Measurement of Outer Peripheral Distortion of Honeycomb Structure)

The shape of the honeycomb structure for use in the present embodiment was a cylindrical shape having a diameter of about 110 mm, height of about 97 mm, and the rib thickness was about 70 $\mu$m. An image of an end surface of the honeycomb structure was taken by an image take-in device, and the outer peripheral distortion was measured/calculated following the method for measuring the outer peripheral distortion of the present invention.
It is to be noted that the following low pass filter was used.
Type of the filter: a finite impulse response (FIR) filter. A window function process (Hamming window) was used.
Normalized cut-off frequency: 0.03 (assuming the peripheral length of 1, frequencies higher than 1/0.03 = 33 Hz were cut.)

(Measurement of Isostatic Strength)

A hydraulic type compression tester (Japanese Patent Application Laid-Open No. 2001-41867) including a measurement container constituted of a cylindrical container, urethane sheet, and urethane sleeve was used to conduct a compression test of the honeycomb structure. At the time of measurement, the pressure was added up to 5 kg/cm$^2$ at 1 kg/cm$^2$/second, subsequently the pressure was added at 1 kg/cm$^2$/second, and the pressure was added until the honeycomb structure breaks. The strength at the time of breakage was assumed as the isostatic strength.

(Table 1)

| | Average particle diameter ($\mu$m) | | LMp/SMp |
|---|---|---|---|
| | Laser process [LMp] | Precipitation process [SMp] | |
| Talc A | 7.1 | 4.4 | 1.6 |
| Talc B | 7.8 | 4.3 | 1.8 |
| Talc C | 11.9 | 6.2 | 1.9 |
| Talc D | 7.3 | 6.1 | 1.2 |
| Talc E | 8.9 | 6.8 | 1.3 |
| Talc F | 6.4 | 4.0 | 1.6 |
| Kaolin A | 2.1 | 1.3 | 1.6 |
| Kaolin B | 3.4 | 1.4 | 2.4 |
| Kaolin C | 8.2 | 6.8 | 1.2 |
| Kaolin D | 5.7 | 5.5 | 1.0 |

(Table 2)

| | Blend ratio (wt%) | | | | | | Porosity (%) | Coefficient of thermal expansion [CTE] (x $10^{-6}$/°C) | Distortion | Isostatic strength | |
|---|---|---|---|---|---|---|---|---|---|---|---|
| | Talc | | Kaolin | | Alumina | Aluminum hydroxide | | | | | |
| | [1] | [2] | [1] | [2] | | | | | | (MPa) | (kgf/cm²) |
| Example 1 | 20 (A) | 20 (C) | 20 (A) | 23 (B) | 12 | 5 | 25 | 0.4 | 0.020 | 2.94 | 30 |
| Example 2 | 40 (C) | | 20 (A) | 23 (B) | 12 | 5 | 30 | 0.3 | - | - | - |
| Example 3 | 24 (C) | 16 (F) | 20 (A) | 22 (B) | 8 | 10 | 25 | 0.8 | 0.027 | 2.84 | 29 |
| Example 4 | 36 (A) | 4 (C) | 39 (A) | 4 (C) | 12 | 5 | 26 | 0.7 | - | - | - |
| Example 5 | 20 (A) | 20 (C) | 22 (A) | 20 (C) | 8 | 10 | 28 | 0.8 | - | - | - |
| Example 6 | 20 (C) | 20 (D) | 20 (A) | 20 (B) | 5 | 14 | 25 | 0.7 | 0.029 | 1.47 | 15 |
| Comparative example 1 | 40 (E) | | 20 (A) | 21 (B) | 5 | 14 | 25 | 0.9 | 0.032 | 0.78 | 8 |
| Comparative example 2 | 20 (A) | 20 (D) | 43 (C) | | 5 | 14 | 25 | 1.0 | 0.039 | 0.59 | 6 |
| Comparative example 3 | 40 (D) | | 42 (D) | | 12 | 5 | 35 | 1.2 | - | - | - |

From the results of Table 2, it has been confirmed that with the outer peripheral distortion of the honeycomb structure which is 0.030 or less in Examples 1, 3, 6, the isostatic strength can be set to 0.98 MPa (10 kgf/cm$^2$) or more.

On the other hand, it has been confirmed that in the Comparative Examples 1 and 2, the outer peripheral distortion of the honeycomb structure exceeds 0.030, and the isostatic strength is less than 0.98 MPa (10 kgf/cm$^2$).

From the above-described results, the distortion of the outer side (outer wall portion) of the honeycomb structure at the time of the firing of the honeycomb structure was reduced, and the outer peripheral distortion of the honeycomb structure was set to 0.030 or less, so that it was possible to obtain the honeycomb structure having a practical isostatic strength.

In the present invention, the examples of the ceramic honeycomb structure of the dense material have been described. However, also for the other materials and structures, when the drop of the isostatic strength is brought about by compression/deformation at the time of the firing, the idea of the present invention can be used to obtain products having the reduced outer peripheral distortion and satisfactory strength. This can easily be inferred by any person skilled in the art.

(Examples 7 and 8, Comparative Examples 4 and 5)

By a manufacturing method similar to that of Example 1, the honeycomb structures (Examples 7 and 8, Comparative Examples 4 and 5) having a cell density of 900 cells/in$^2$ (140 cells/cm$^2$) and the cell partition wall thickness and porosity shown in Table 3 were prepared, and the erosion resistance was evaluated in the following method.

(Evaluation of Erosion Resistance)

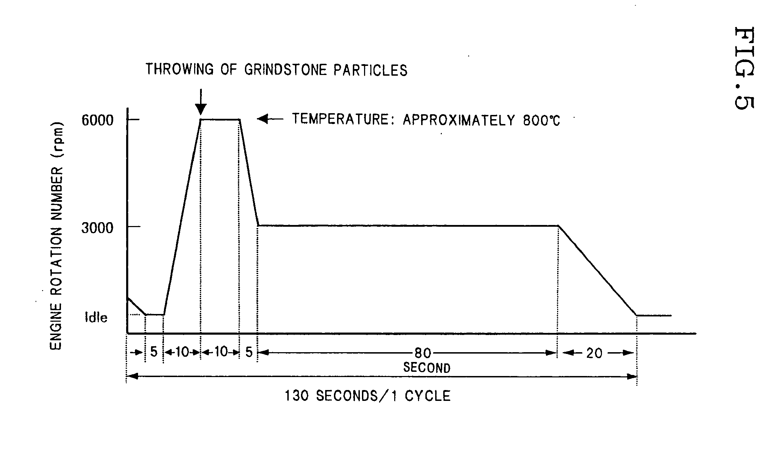

For the honeycomb structure, a metal can in which the honeycomb structure was grasped/contained was connected to an exhaust port of an in-line four-cylinder gasoline engine having displacement of 1.8 liters. That is, a sample was disposed in the vicinity of the engine. Next, on conditions shown in FIG. 5, the engine was run. When the rotation number reached 6000 rpm, 0.1 gram of abrasive grains (silicon carbide, GC320, average particle diameter of 50 $\mu$m) were charged. Furthermore, on the conditions shown in FIG. 5, the engine was continued to run, 130 seconds were regarded as one cycle, the abrasive grains were charged once in two cycles, and this was continuously repeated. A total abrasive grain charge amount was changed to about 2 g to 16 g, while some tests were carried out, and the erosion amount (air erosion volume) of the honeycomb structure at the abrasive grain charge amount of 10 g was calculated from the result.

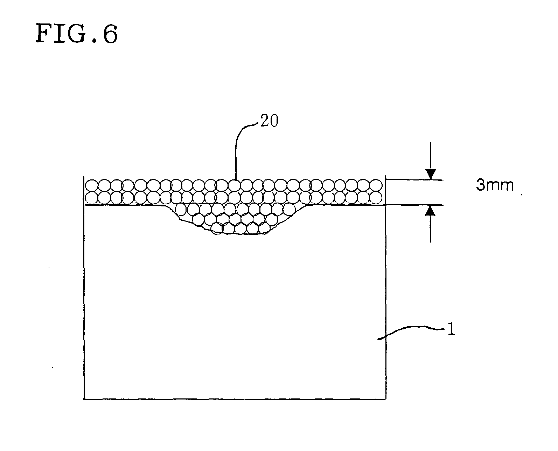

For the erosion amount, as shown in FIG. 6, a rubber sheet was wound around a processed end surface on the side of the measurement of the erosion amount of the honeycomb structure 1, and ceramic beads 20 having a diameter of 1.5 mm were embedded at a height of about 3 mm in the surface and subsequently collected to measure a bead volume. A difference between the bead volumes after and before the erosion test was taken/measured, and an average of three measurements was obtained as the erosion amount.

Results are shown in Table 3. Here, a bulk density of each honeycomb structure was calculated as the index of the heat capacity. For the sample of Comparative Example 4, the erosion resistance is satisfactory, but the bulk density is large, and this indicates that the heat capacity is large. For the sample of Comparative Example 5, the bulk density is small, and the heat capacity is low, but the erosion amount is large, and the erosion resistance is bad. On the other hand, the samples of Examples 7 and 8 are low in both the erosion resistance and bulk density, and it has been seen that the erosion resistance and the reduced heat capacity are improved with good balance. Especially, the samples of Examples 7 and 8 are close to the sample of Comparative Example 5 in the bulk density, that is, the heat capacity, but the samples of Examples 7 and 8 indicate small erosion amounts. It is seen that for the honeycomb structure of the present invention, the reduction of the heat capacity and the enhancement of the erosion resistance are achieved with good balance.

(Table 3)

| | Cell density (cells/cm$^2$) | Basic partition wall thickness (mm) | Thick portion partition wall (mm) | Open area ratio [P] (%) | Porosity (%) | Erosion amount (cm$^3$) in charge amount of 10 g | Bulk density (g/cm$^3$) |
|---|---|---|---|---|---|---|---|
| Example 7 | 140 | 0.066 | 0.066 | 85.1 | 28 | 2.0 | 0.291 |
| Example 8 | 140 | 0.062 | 0.062 | 85.9 | 26 | 1.8 | 0.283 |

(continued)

| | Cell density (cells/cm$^2$) | Basic partition wall thickness (mm) | Thick portion partition wall (mm) | Open area ratio [P] (%) | Porosity (%) | Erosion amount (cm$^3$) in charge amount of 10 g | Bulk density (g/cm$^3$) |
|---|---|---|---|---|---|---|---|
| Comp. Example 4 | 140 | 0.086 | 0.086 | 80.7 | 35 | 1.8 | 0.336 |
| Comp. Example 5 | 140 | 0.071 | 0.071 | 83.9 | 35 | 5.0 | 0.284 |

(Example 9, Comparative Example 6)

As Example 9 and Comparative Example 6, the catalysts were carried by the honeycomb structures obtained by Example 8 and Comparative Example 5, and the erosion resistance test was carried out in the same manner as described above. To carry the catalyst, the honeycomb structure was immersed in a solution containing active alumina and catalyst noble metals, extra solution was removed, and the structure was baked.

Results are shown in Table 4. According to Example 9 and Comparative Example 6, since the catalysts were carried, the erosion resistance was enhanced. However, even in this case, the honeycomb structure of the present invention (Example 9) shows an erosion resistance more satisfactory than that of the honeycomb structure of Comparative Example 6.

(Table 4)

| | Cell density (cells/cm$^2$) | Basic partition wall thickness (mm) | Thick portion partition wall (mm) | Open area ratio [P] (%) | Porosity (%) | Erosion amount (cm$^3$) in charge amount of 10 g | Bulk density (g/cm$^3$) |
|---|---|---|---|---|---|---|---|
| Example 9 | 140 | 0.062 | 0.062 | 85.9 | 26 | 0.4 | 0.283 |
| Comp. Example 6 | 140 | 0.071 | 0.071 | 83.9 | 35 | 1.2 | 0.284 |

The surface roughness of the samples obtained in Example 7 and Comparative Example 5 was measured by the above-described method. The pore distributions of these samples were measured in a method similar to the above-described method. Furthermore, the canning properties of these samples were measured in the following method.

A grasping material (0.2 g/cm$^3$) was wound around the honeycomb structure which was the sample, and the structure was grasped in a can of SUS. Subsequently, when the honeycomb structure was punched at a punching speed of 1 mm/min. at temperature of 600°C, a maximum load (N) was measured as the index of the canning property.

These results are shown in Table 5. In Table 5, $Ra_s$ and $RzDIN_s$ of the samples of Example 7 and Comparative Example 5 are 0.5 $\mu$m or more, and 5 $\mu$m or more, respectively. For the pore distribution, the pores having a pore diameter of 1 $\mu$m or more occupied 90% or more by volume. Furthermore, punching strengths of the samples of Example 7 and Comparative Example 5 indicated high strengths of 480 N and 510 N and the satisfactory canning property was shown.

(Table 5)

| | $Ra_s$ ($\mu$m) | $RzDIN_s$ ($\mu$m) | Punching load (N) |
|---|---|---|---|
| Example 7 | 1.7 | 11.9 | 480 |
| Comparative Example 5 | 1.8 | 12.8 | 510 |
| Comparative Example 3 | 0.4 | 4.0 | 205 |

(Example 10, Comparative Example 7)

Next, a sample (honeycomb structure shown in FIG. 2) in which the cell partition wall thickness of ten cells extending inwards from the outermost peripheral cell was increased with respect to the basic cell partition wall thickness as shown in Table 6 was prepared in the same method as in Example 1. After carrying the catalyst in a method similar to the above-described method, the erosion resistance was evaluated in a method similar to the above-described method. Results are shown in the Table 6. Although the sample of the present invention (Example 10) had a very small basic wall thickness of 0.056 mm, the sample indicated a relatively satisfactory erosion resistance. The sample obtained in Comparative Example 7 also indicated the relatively satisfactory erosion resistance despite of the small basic wall thickness of 0.055 mm, but indicated the erosion amount larger than that of the sample of Example 10, despite of an outer peripheral side wall thickness which was larger than that of the sample of the example.

(Table 6)

| | Cell density (cells/cm$^2$) | Basic partition wall thickness (mm) | Thick portion partition wall (mm) | Open area ratio [P] (%) | Porosity (%) | Erosion amount (cm$^3$) in charge amount of 10 g |
|---|---|---|---|---|---|---|
| Example 10 | 140 | 0.056 | 0.072 | 86.3 | 27 | 1.0 |
| Comparative Example 7 | 140 | 0.055 | 0.081 | 85.9 | 35 | 3.8 |

(Examples 11 and 12)

In the method similar to that of Example 1, samples having a basic cell partition wall thickness of 0.047 mm, a cell partition wall thickness up to ten cells extending inwards from the outermost peripheral cell of 0.067 mm, and a porosity of 27% were prepared to carry the catalysts in the method similar to the above-described method. Furthermore, the porosity of a portion at 5 mm from the end surface struck by the exhaust gas was lowered to 18% by the following method, and subsequently the erosion resistance was evaluated in the method similar to the above-described method.

(End Surface Porosity Lowering Method)

After adding and mixing water to celluben, silica sol was added/mixed, and further the surface-active agent was added and mixed to prepare a slurry having a ratio in which components including a fine particle celluben (1 to 2 $\mu$m) solid content occupying 90 wt% of the whole, a colloidal silica (30 wt% of silica sol) solid content occupying 10 wt% of the whole, and a small amount of the added surface-active agent occupied 40 wt% of the whole, and water occupied 60 wt% of the whole. Next, the honeycomb structure was heated/dried in a drier at 150°C for one or more hours, and subsequently extracted and the weight was measured. After leaving the honeycomb structure to stand at room temperature, the slurry was placed into the container at an end surface strengthening depth, and the honeycomb structure was immersed to contact the bottom of the container for one to two seconds. The honeycomb structure was lifted up, and shaken to remove the solution to some degree. Thereafter, the inner solution was removed by air blow. After confirming that there was no clogging, the structure was dried in hot blaster (about 130°C, wind velocity of 2 m/second, three minutes or more), and further dried in the drier (150°C, for one or more hours). This was fired on firing conditions of the honeycomb structure to lower the porosity of the end surface.

Table 7 shows results of the erosion resistance tests of a sample (Example 11) whose porosity of the end surface was not lowered and a sample whose porosity of the end surface was lowered (Example 12). Assuming that the basic cell partition wall thickness was 0.047 mm, although the cell partition wall on the side of the outer peripheral portion was thickened, a considerable erosion amount (3.3 cm$^3$) was shown. However, since the porosity of the end surface was further lowered, the erosion amount was improved to 1.8 cm$^3$.

(Table 7)

| | Cell density (cells/cm$^2$) | Basic partition wall thickness (mm) | Thick portion partition wall (mm) | Open area ratio [P] (%) | Porosity (%) | Erosion amount (cm$^3$) in charge amount of 10 g | Porosity of end surface (%) |
|---|---|---|---|---|---|---|---|
| Example 11 | 140 | 0.047 | 0.067 | 88.6 | 27 | 3.3 | 27 |
| Example 12 | 140 | 0.047 | 0.067 | 88.6 | 27 | 1.8 | 18 |

INDUSTRIAL APPLICABILITY

According to a honeycomb structure, a method for manufacturing the structure, and a method for measuring an outer peripheral distortion of the honeycomb structure of the present invention, when a distortion of an outer side (outer wall portion) of the honeycomb structure at the time of firing of the honeycomb structure is reduced, it is possible to obtain satisfactory and practical erosion resistance and isostatic strength in the respective honeycomb structures including various cell structures.

The following numbered paragraphs (paras.) contain statements of broad combinations of the inventive technical features herein disclosed:-

1. A honeycomb structure comprising: porous cell partition walls forming a compound material in which a plurality of cells are disposed adjacent to one another; and a porous honeycomb outer wall which surrounds and holds an outermost peripheral cell positioned in an outermost periphery of the cell compound material, characterized in that porosity is 5% or more and is less than 30%, and an outer peripheral distortion of the honeycomb structure is 0.030 or less.

2. The honeycomb structure according to para. 1, wherein a partition wall thickness (Tc) of the honeycomb structure is 0.030 mm ≤ Tc < 0.076 mm.

3. The honeycomb structure according to para. 1 or 2, wherein an outer wall thickness (Ts) of the honeycomb structure is 0.076 mm or more.

4. The honeycomb structure according to any one of paras. 1 to 3, wherein a coefficient of thermal expansion at 40 to 800°C in a channel direction of the honeycomb structure is $0.8 \times 10^{-6}$/°C or less.

5. A method for manufacturing a honeycomb structure according to any one of paras. 1 to 4 comprising: porous cell partition walls forming a compound material in which a plurality of cells are disposed adjacent to one another; and a porous honeycomb outer wall which surrounds and holds an outermost peripheral cell positioned in an outermost periphery of the cell compound material, characterized in that the method comprising: using a raw material containing at least talc and kaolin components, containing talc whose average particle diameter is 7 μm or more, and containing kaolin whose average particle diameter is 2 μm or more to carry out a firing process in which a temperature range is held at 1100 to 1200°C for a given time or temperature is raised at a temperature rise speed of 50°C/hr or less and is subsequently raised at a maximum temperature.

6. The method for manufacturing the honeycomb structure according to para. 5, wherein the method comprising: using talc and kaolin whose average particle diameter in terms of a substantial sphere diameter measured by a laser diffraction process is 1.6 or more times that in term of a Stokes' diameter measured by a precipitation process.

7. A method for measuring an outer peripheral distortion of a honeycomb structure, characterized by: measuring an outer peripheral shape of the honeycomb structure; extracting a measurement point from a group of obtained measurement points in such a manner that a pitch on an outer periphery becomes equal; obtaining a center, and angle and distance (diameter) from the center from the measurement point; subjecting obtained distance information to a low pass filter treatment; subsequently obtaining an absolute value of a difference between an obtained waveform and a waveform subjected to the filter treatment; and obtaining an average value in positions of the extracted measurement points.

8. The method for measuring the outer peripheral distortion of the honeycomb structure according to para. 7, wherein the method comprising: using an FIR filter in the filter treatment.

**Claims**

**1.**   A method of manufacturing a honeycomb structure comprising porous cell partition walls (2) forming a compound material in which a plurality of cells are disposed adjacent to one another and a porous honeycomb outer wall (4) which surrounds and holds an outermost peripheral cell (8) positioned in an outermost periphery of the cell compound material, the porosity of the cell compound material being 5% or more and less than 30%, the method comprising: using a raw material containing at least talc and kaolin components, to carry out a firing process in which the temperature is held in the range 1100 to 1200°C for a given time or temperature is raised at a temperature rise speed of 50°C/hr or less, and is subsequently raised to a maximum temperature, the raw material containing talc whose average particle diameter is 7 $\mu$m or more and kaolin whose average particle diameter is 2 $\mu$m or more, wherein coarse particle talc having an average particle diameter of 7 $\mu$m or more is combined with fine particle talc having an average particle diameter of 2/3 or less times that of the coarse particle talc, the average particle diameter being determined by laser diffraction.

2. The method according to claim 1, wherein said talc and kaolin have an average particle diameter in terms of a substantial sphere diameter measured by a laser diffraction process which is 1.6 or more times that in term of a Stokes' diameter measured by a precipitation process.

FIG.1(a)　　　FIG.1(b)

FIG.1(c)

FIG.2

FIG.3(a)    FIG.3(b)    FIG.3(c)

FIG.4

FIG.5

FIG.6

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2000051710 A

- JP 2001041867 A